# EUROPEAN PATENT APPLICATION

(11) **EP 3 722 792 A1**
(43) Date of publication of application: **14.10.2020**
(21) Application number: 19168143.6
(22) Date of filing: 09.04.2019
(51) Int. Cl.: G01N 21/86, F21V 7/00, F21V 7/04, G01N 21/89, F21V 8/00, F21W 131/403

(54) **ILLUMINATION FOR WEB IMAGING**

(71) Applicant: ABB Schweiz AG, 5400 Baden (CH)
(72) Inventor: Huotilainen, Tommi, 00560 Helsinki (FI); Riikonen, Seppo, 02340 Espoo (FI); Rautelin, Steven, 00380 Helsinki (FI)
(74) Representative: Zimmermann & Partner Patentanwälte mbB

(57) **Abstract**

According to an embodiment, an illumination direction defining device (230) for an illumination system of a web imaging apparatus (200) is provided. The illumination direction defining device includes a length in a lengthwise direction (LD), a width in a widthwise direction, and a depth in a depthwise direction. The length is larger than the width. The illumination direction defining device includes light ducts (232) arranged adjacent to each other in the lengthwise direction. The light ducts are configured to receive light from a light source (120) of the illumination system. The light ducts are configured to output light beams having a pre-defined principal direction. The pre-defined principal direction has a component in the lengthwise direction and a component in the depthwise direction.

## Description

The present disclosure relates to the field of web imaging and monitoring, in particular to surface analysis and defect detection for webs which may, e.g., be made of paper or paper board. Specifically, embodiments relate to illumination for web imaging, in particular line scan web imaging, and to corresponding devices, systems and methods, and to a web imaging apparatus including an illumination system.

### Background

In papermaking, surface analysis and defect detection are important parts of paper or paper board quality monitoring. When line scan imaging is used for web monitoring there are different kinds of traditional illumination and measurement concepts available. The web runs in a machine direction and forms a plane, spanned by the machine direction and a cross-machine direction perpendicular to the machine direction, at the location of line scan imaging. Paper or paper board surfaces can be imaged by high or low angle reflection measurement. A low angle reflection measurement means that a camera imaging the web views the web at the location of line scan imaging under a small camera viewing angle with respect to the machine direction, the camera viewing angle being measured in a plane whose normal is the cross-machine direction. A small camera viewing angle may, e.g., be an angle smaller than 45°. High angle reflection measurement means that the camera viewing angle between the camera viewing direction and the machine direction is large (e.g., larger than 45°). With respect to the illumination angle (or light beam angle), i.e., the angle between the principal illumination direction and the machine direction, both high and low illumination angles have been employed.

A low angle illumination with a high camera viewing angle can be used for surface topography imaging. Streaks in the machine direction, such as blade streaks, can be detected based on low angle reflection measurement. These streaks are mostly not visible by a camera with high viewing angle, not even with low angle illumination. If both streaks and color spots should be detected the system typically includes both high angle and low angle reflection measurements, and needs two cameras viewing the line scan imaging area under different angles. The use of two cameras increases the complexity and cost of web imaging and monitoring. Therefore, there is a need for improvement.

### Summary

According to an embodiment, an illumination direction defining device for an illumination system of a web imaging apparatus is provided. The illumination direction defining device includes a length in a lengthwise direction, a width in a widthwise direction, and a depth in a depthwise direction. The length is larger than the width. The illumination direction defining device includes light ducts arranged adjacent to each other in the lengthwise direction. The light ducts are configured to receive light from a light source of the illumination system. The light ducts are configured to output light beams having a pre-defined principal direction. The pre-defined principal direction has a component in the lengthwise direction and a component in the depthwise direction.

Another embodiment relates to an illumination system for a web imaging apparatus. The illumination system includes a light source. The light source has a length in a lengthwise direction and width in the widthwise direction. The length of the light source is larger than the width of the light source. The illumination system is configured to output light beams having a pre-defined principal direction that has a component in the lengthwise direction and a component in the depthwise direction. The illumination system may include the illumination direction defining device.

A further embodiment relates to a web imaging system including the illumination system and an imaging device. The illumination system is arranged for illuminating a web with the light beams. The imaging device is configured to collect scattered light scattered from the web and to provide an image of the web generated from the collected scattered light.

Another embodiment relates to a web imaging method. The web imaging method includes moving a web in a machine direction, the web extending in the machine direction and in a cross-machine direction perpendicular to the machine direction. The web imaging method includes illuminating the web with light beams, and collecting scattered light scattered from the web. The web imaging method includes providing an image of the collected scattered light. The illumination direction of the light beams has a component in the cross-machine direction. The image of the collected scattered light may show the surface structure (surface topography) of the web and/or may show the surface color. The image of the collected scattered light may show defects of the web. So, the surface appearance of the web may be analyzed, and the quality of the web surface may be determined.

Another embodiment relates to the use of the illumination direction defining device or of the illumination system for illumination of a web that extends in a machine direction and in a cross-machine direction perpendicular to the machine direction, wherein the illumination has an illumination direction that has a component in the cross-machine direction.

Further advantages, features, aspects and details that can be combined with embodiments described herein are evident from the dependent claims, the description and the drawings.

### Brief description of the figures

More details will be described in the following with reference to the figures, wherein
Figs.1 and 2 show a perspective view and a side view of a web imaging system;
Figs. 3-5 show a perspective view, a side view and a frontal view of a web imaging system, of an illumination system and of an illumination direction defining device according to embodiments described herein;
Figs. 6-10 show a cross-sectional views of illumination systems, light sources and illumination direction defining devices according to embodiments described herein;
Fig. 11 shows a perspective view of a web imaging system with an illumination system and illumination direction defining devices according to embodiments described herein;
Figs. 12-13 show photographs of webs imaged with the web imaging system of Figs. 1 and 2 and imaged with the web imaging system of Figs. 3-5;
Fig. 14 shows a schematic flow diagram of a web imaging method according to embodiments described herein.

### Detailed description

In the following, embodiments of the invention are described. Embodiments and parts thereof can be combined in any manner. For example, any aspect of an embodiment described herein can be combined with any other aspect of any other embodiment to form yet further embodiments. The detailed description of embodiments is provided for illustration.

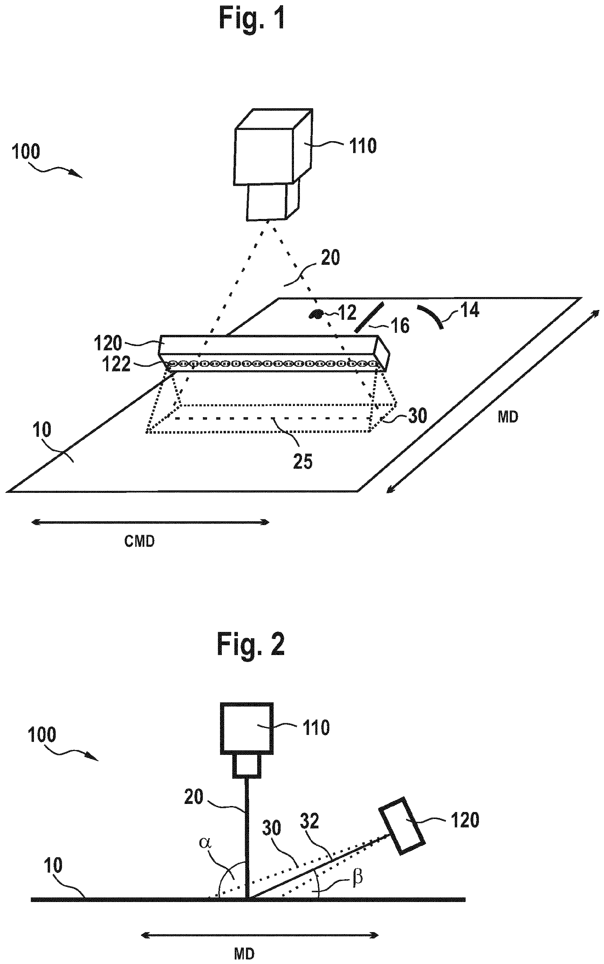

Figs. 1 and 2 show a schematic illustration of a web imaging system 100. The web imaging system 100 includes a line scan camera 110 having a field of view 20 on a web 10. The web 10 is made of paper and extends in a machine direction MD, in which it moves, and in a cross-machine direction CMD that is perpendicular to the machine direction MD. The cross-machine direction (CMD) is also known under the name cross direction (CD). Fig. 1 is a perspective view of the web imaging system 100 and of the web 10 lying the plane defined by the machine direction MD and the cross-machine direction CMD, and Fig. 2 is a side view in which the normal to the drawing plane points in the cross-machine direction. The line scan camera 110 images line 25 on the web 10 with high repetition rate as the web 10 moves past the camera 110 so as to produce an image of the web 10. The camera viewing angle α is a high angle larger than 45°, e.g. from 60° to 90°, in this case the maximum angle of 90° as is best be seen in Fig. 2.

The web imaging system 100 further includes a light source 120. The light source 120 includes a one-dimensional array of light emitting diodes, LEDs, 122. Each of the LEDs emits light with the same main direction (or central ray direction of each LED) and a particular spread. The main direction under which the LEDs emit light is the illumination direction 32 in Fig. 2. The line of LEDs 122 combined emit light in a light cone 30 and substantially homogenously illuminate an area on the web that includes the line 25 imaged by the line scan camera 110, wherein the central ray of each LED propagating in the illumination direction 32 impinges on the web at the line 25 imaged by the line scan camera. The illumination direction 32 provides for a low angle illumination in the machine direction, e.g., less than 45°, the illumination angle β between the illumination direction 32 and the web 10, measured in the plane whose normal is the cross-machine direction, being about 25° in Fig. 2. The camera viewing angle α and the illumination angle β are measured so that these angles do not exceed 90°, and therefore the camera viewing angle α is measured clockwise and the illumination angle β is measured counter-clockwise in Fig. 2.

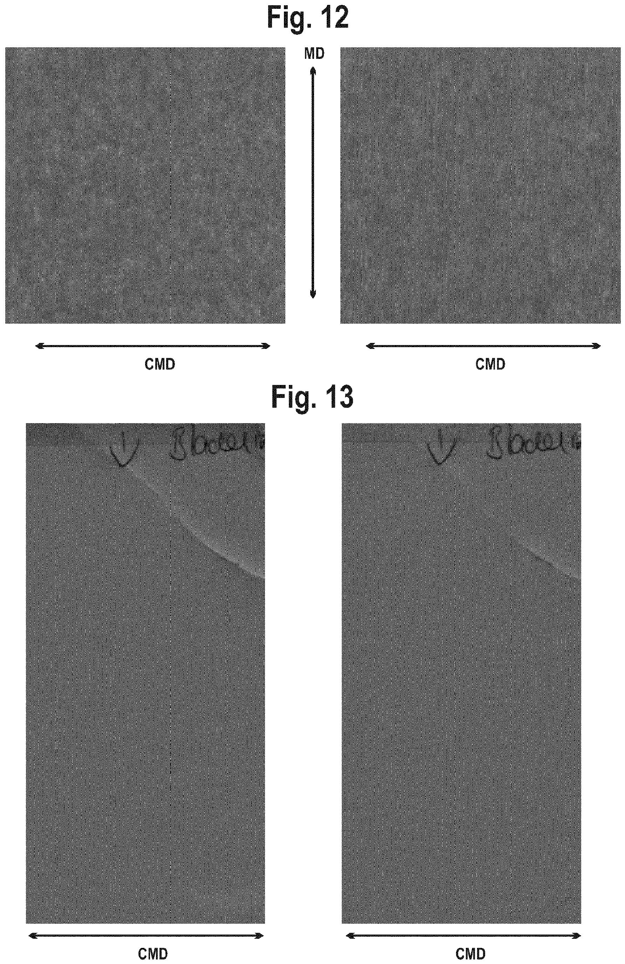

As the web 10 passes underneath the line scan camera 110, e.g., from the background of Fig. 1 towards the foreground, the line scan camera 110 repeatedly images illuminated line 25. Defects of the web 10, like color defect 12 and surface topography defect 14, but also blade streak 16 extending parallel to the machine direction MD, thus pass under the field of view 20 of the line scan camera 110. While the color defect 12 and the surface topography defect 14 can be reliably imaged and afterwards detected with this setup. Blade streak 16, however, may be invisible in the web image and go by unnoticed in this setup. See also the left sides of Figs. 12 and 13 showing images of a web produced with this setup. A blade streak extending vertically from top to bottom in Fig. 13 at the position indicated by the black, hand-drawn arrow, is invisible on the left side of Fig. 12.

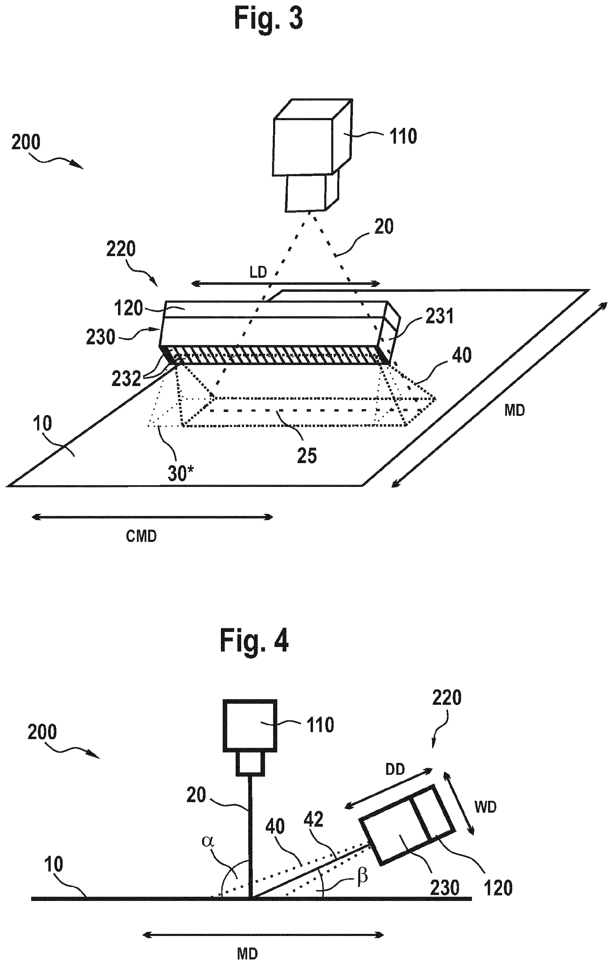

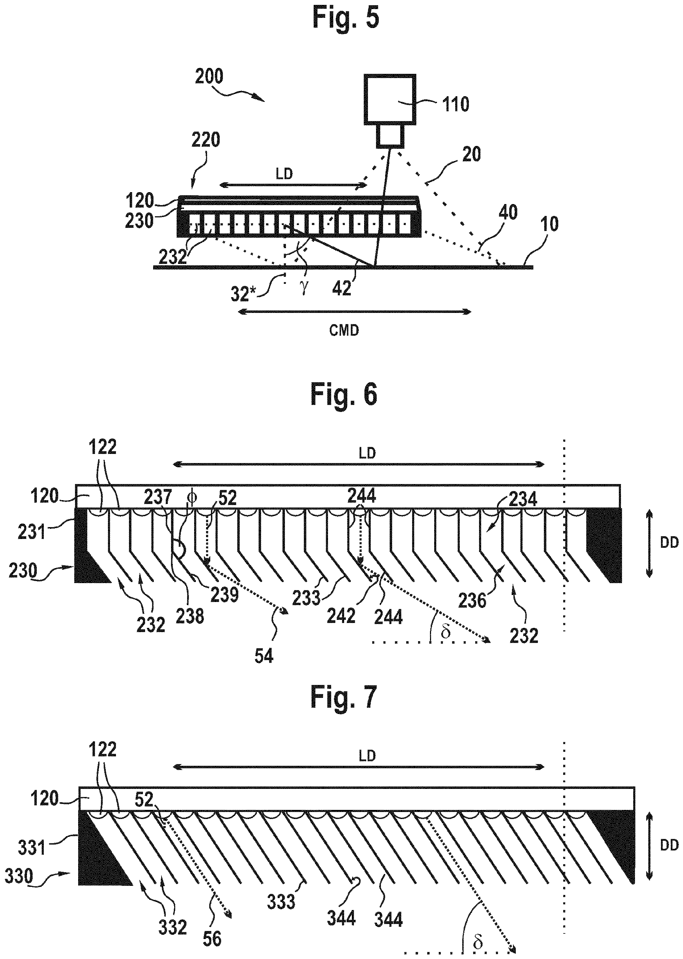

Figs. 3 to 5 show schematic illustrations of a web imaging apparatus 200 according to an embodiment. Only the differences to the web imaging apparatus 100 of Figs. and 2 are described in detail. The web imaging apparatus 200 includes the line scan camera 110 which images, in the field of view 20, the line 25 on the web 10. The web imaging apparatus 200 may include several such line scan cameras, e.g. from 1 to 100 of such line scan cameras, wherein the line scan cameras may all have the same camera direction angle and may perform coordinated/synchronized line scanning of different lines on the web 10. The web 10 lies in a plane spanned by the machine direction MD, in which the web 10 moves, and by the cross-machine direction CMD that is perpendicular to the machine direction MD. Fig. 3 is a perspective view of a web imaging apparatus 200 and Fig. 4 a side view thereof with a drawing plane whose normal points in the cross-machine direction CMD, similar as in Figs. 1 and 2. In addition, Fig. 5 shows a frontal view of a web imaging apparatus 200 with a drawing plane whose normal points in the machine direction MD.

The web imaging apparatus 200 includes an illumination system 220. The illumination system 220 is a line source of light and illuminates the web 10 by light cone 40 formed by beams of the line source of light. The main direction of the light emitted by the illumination system 220, i.e., the illumination direction 42, still forms an angle β with the web 10 as measured in the plane whose normal points in cross-machine direction CMD (as can be seen from a comparison of Fig. 2 and Fig. 4).

The illumination system 220 is configured to emit light such that the illumination direction 42 has a component in the cross-machine direction CMD. The illumination direction 42 is not aligned with the machine direction MD, but shines on the web 10 sideways in the cross-machine direction as schematically shown in Fig. 5. That means, in the frontal view of Fig. 5, where the drawing plane has a normal that points in the machine direction, that the illumination direction 42 forms an angle γ larger than zero with a vertical line 32* that would represent a light direction in alignment with the machine direction MD. The angle γ is smaller than 90°, but can be quite large, e.g., larger than 60°, 70°, 80° or 85°, so the light can be grazing light in the cross-machine direction. In Fig. 3, the dotted lines referenced by reference sign 30* show a virtual light cone that the illumination source 220 would emit if the main direction of the light were aligned with the machine direction (as was the case in Fig. 1). Comparison with the actual light cone 40 shows the shift of the illumination direction 42 in the cross-machine direction, caused by the component of the illumination direction 42 in the cross-machine direction.

The illumination system 220 has a length L_{IS} in a lengthwise direction LD that is aligned with the cross-machine direction CMD, has a width W_{IS} in a widthwise direction WD and has a depth D_{IS} in a depthwise direction DD as shown in Figs. 3 and 4, wherein the LD, WD and DD are mutually orthogonal. In Fig. 4, the depthwise direction DD is aligned with the projection of the illumination direction 42 onto the drawing plane. The illumination direction 42, i.e., the main direction or central ray direction of the illumination system 220, has a component in the lengthwise direction LD. In addition, the illumination direction 42 has a component in the depthwise direction DD. In comparison, the illumination direction 32 of the light source 120 in Fig. 1 has only a component in the depthwise direction DD.

In the embodiment shown in Figs. 3-5, the illumination system 220 includes the same light source 120 with LEDs as the web imaging system 100 of Figs. 1 and 2. The illumination system 220 further includes an illumination direction defining device 230 that defines the illumination direction 42 of the illumination system 220. The illumination direction defining device 230 is mounted to the light source 120 on the side where the LEDs emit light. In the embodiment of Figs. 3-5, the illumination direction defining device 230 changes the illumination direction, giving it a component in the lengthwise direction LD, where the lengthwise direction LD is aligned with the cross-machine direction CMD. The illumination direction defining device 230 is therefore an illumination direction changer in this embodiment.

Fig. 6 shows a cross-sectional view of the illumination direction defining device 230 of Figs. 3-5, the drawing plane of the cross-section having a normal pointing in the widthwise direction WD of the illumination direction defining device 230. The illumination direction defining device 230 includes a housing 231, and light ducts 232 arranged adjacent to each other in the lengthwise direction LD. The light ducts may also be called light funnels. Each light duct of the light ducts 232 is bounded by four walls. The housing 231 forms a front wall and a back wall for each light duct (not visible in the cross-section of Fig. 5). The other two walls are intermediate walls 233 separating the light ducts 232 from each other. For the first light and the last light duct in the line of light ducts 232 that are arranged in the lengthwise direction, the housing 231 may form one of the sidewalls instead of an intermediate wall. In Fig. 6, the light ducts 232 have rectangular cross-sections when cut at any plane spanned by the widthwise direction WD and depthwise direction DD.

Each light duct of the light ducts 232 has an upper portion 234 and a lower portion 236. The lower portion 236 is tilted in the lengthwise direction LD with respect to the upper portion 234 that runs in the depthwise direction DD. The light ducts 232 exhibit a kink or (sharp) turn between the upper portion 234 and the lower portion 236. Each of the intermediate walls 233 has a kink/turn 238 between an upper wall portion 237, extending only in the depthwise direction DD and the widthwise direction WD, and a lower wall portion 239. The intermediate walls 233 are angled at the kink/turn 238 with an interior angle φ between the upper wall portion 237 and the lower wall portion 239, wherein the interior angle φ may be, e.g., between 137.5° and 145°. With an interior angle φ in this range, the lower wall portion 239 forms angles between 47.5° and 55° with respect to a plane spanned by the widthwise direction WD and the lengthwise direction LD.

The lower portion 239 of each light duct has a reflective surface 242 on the side of the interior angle φ. The lower portion 239 may be a mirror, or have a mirror attached to it, in order to provide the reflective surface 242. The reflective surface 242 is configured to reflect light from a light source to which the illumination direction defining device 230 is mounted, such as light source 120 with LEDs 122. The reflective surface 242 may be a color mirror matching the color of the light emitted from the light source 120, wherein "matching" means that the color mirror best reflects the frequency (wavelength) of the light emitted from the source 120. Some or all other wall portions or walls of the light ducts 232 may be light absorbent, e.g., painted matte black. For instance, the upper wall portions 237 of the intermediate walls 233 can have light absorbent surfaces 244 on both sides, and the lower wall portion 239 can have a light absorbent surface 244 on the side opposite to the reflective surface 242. The form of the light ducts, in particular the form of the intermediate walls, can prevent leakage of light between different light ducts, and increase the directionality of the light beams output from the light ducts (the longer the light ducts are and/or the smaller their cross-section is, the more will a spread of the LEDs be reduced at the price of loss of light intensity). Direct light from the LEDs may be prevented from reaching the illuminated web. The reflective surfaces define the pre-defined principal direction of the light beams output from the light ducts. The absorbent surfaces increase directionality by absorbing light propagating in directions considerably differing from the principal direction of light propagation.

The illumination direction defining device 230 has a length L_{IDDD} in the lengthwise direction LD, a width W_{IDDD} in the widthwise direction WD, and a depth D_{IDDD} in the depthwise direction DD. The length L_{IDDD} may substantially correspond to the length L_{LS} of the light source, and thus to the length L_{IS} of the illumination system. The number N_{LD} of light ducts may correspond to the number N_{LU} of LEDs or other light units of the light source to which the illumination direction defining device is to be mounted. In Fig. 6, the number N_{LD} of light ducts 232 is equal to the number N_{LU} of LEDs 122 in the illumination system 220. The illumination direction defining device is mounted to the light source 120 including the LEDs 122 such that each LED 122 emits light into one light duct of the light ducts 232, but not into others. The intermediate walls 233 suppress cross-talk between the light ducts 232. The lower wall portions 239 with reflective surfaces 242 are so long that no ray of light emitted into the light ducts 232 in the depthwise direction DD, or parallel to the upper wall portions 237, can pass through without deflection. There may be no direct line of sight through the light ducts 232.

When the illumination direction defining device 230 is mounted to the light source 120 as shown in Fig. 6, and each of the LEDs 122 has a main direction of light emission in the depthwise direction DD as illustrated by a light ray 52, the light is reflected at the reflective surfaces 242 (e.g., mirrors), and the light ray 54 illustrates the main direction of light propagation after reflection. The angle δ of the light ray 54 with respect to a plane spanned by the lengthwise direction LD and the widthwise direction WD lies in the range from 0.5° to 30° if the interior angle φ is from 135.25° to 150°, the relation being δ=2(φ-135°). The components of the direction of the light ray 54 in the lengthwise direction LD and in the depthwise direction DD shown in Fig. 6 also represent the components of the illumination direction of the illumination system 220 in the lengthwise direction LD and in the depthwise direction DD. The components of the illumination direction with respect to the machine direction, the cross-machine direction and the direction perpendicular to these two directions, depends on the position and orientation of the illumination system 220.

When the lengthwise direction LD and the cross-machine direction CMD are aligned as shown in Figs. 3-5, the component in the lengthwise direction LD equals that in the cross-machine direction CMD. The light output from the illumination system 220 including the illumination direction defining device 230 can thus come in as grazing light in the cross-machine direction. The illumination direction defining device 230 does not only change the main direction of light propagation of the light source 120, but typically also reduces the spread of the light emitted from LEDs 122 since light impinging on the absorbent surfaces 244 of the upper wall portions 237 and of the lower wall portions 239 will be absorbed to a great extent. This effect may almost not be present if the spread of the LEDs is already so small that substantially no light is emitted towards, or propagates towards, the absorbent surfaces 244.

The right sides of Figs. 12 and 13 show images of a web produced with the setup of Figs. 3-6. The camera had a 50 mm camera lens. The camera viewing angle α was chosen to be 90°, the illumination angle β (light beam angle of the light sources) was chosen to be 20°, and the interior angle φ to be about 150 degrees causing the angle δ to be about 30°. The light source had 2x60 LEDs, and spacing between the LEDs was 10 mm. The spread angle of an individual LED with lens was about 120 degrees in CMD and about 30 degrees in MD. The power of each LED was 3W.

As compared to the left sides of Figs. 12 and 13 produced with the setup of Figs. 1-2, structures extending in the machine direction are discernible much better, in particular topographical defects extending in the machine direction. For instance, the blade streak extending vertically from top to bottom in Fig. 13 at the position indicated by the black, hand-drawn arrow, is visible only on the right side of Fig. 13. Color defects, such as the black writing itself, remain visible as well. This allows improved defect detection and surface analysis for quality control and/or process control. Without wishing to be bound to any particular theory, it is believed that the principal direction of light diffused/scattered from the web is in machine direction MD in the apparatus of Figs. 1 and 2. Topography edges in machine direction are then not visible, at least under high camera angle. With the illumination direction having a (major) component in the cross-machine direction CMD according to the embodiment of Figs. 3-6, such structures are believed to cast shadows that are visible even under high camera angle. The illumination direction defining device, the illumination system, and the web imaging apparatus according to embodiments described herein thus allow to image and detect the most frequently occurring defects on webs, such as paper or paper board webs, with one illumination system and one line scan camera, e.g., with low angle illumination and high angle imaging (i.e., β is low and α is high in the embodiment of Figs. 3-6).

Web imaging is therefore improved as compared to web imaging apparatuses like the one shown in Figs. 1-2. As compared to web imaging apparatuses employing two line scan cameras viewing the web under different angles (high and low), the imaging functionality can be as good or even better, and the complexity and price can be reduced since only one line scan camera is needed. The illumination direction defining device can be used to upgrade existing web imaging apparatuses, e.g., to upgrade a web imaging apparatus as shown in Figs. 1 and 2 with a light source 120 consisting of a line/one-dimensional array of LEDs 122 whose main direction of light emission is in the machine direction. When the illumination direction defining device is attached as shown in Figs. 3-5 and changes the illumination direction of the light source by giving it a component in the cross-machine direction, topography defects extending in the machine direction, such as the blade streak shown on the right side of Fig. 12, become visible without having to change any other component of the web imaging apparatus. An illumination direction defining device as described herein can therefore be an inexpensive, low-maintenance and easy-to-install part that can be employed to upgrade existing web imaging apparatuses, in particular in paper production facilities.

In further embodiments, an illumination of the web with an illumination direction having a component in the cross-machine direction is achieved by other illumination direction defining devices, by a modified, directional light source, or by both a modified, directional light source and an illumination direction defining device combined. For instance, Figs. 7-10 are schematic illustrations of such further embodiments, the drawing plane of Figs. 7-10 being the same as in Fig. 6.

According to an embodiment shown in Fig. 7, an illumination direction defining device 330 is provided. The illumination direction defining device 330 includes a housing 331 and intermediate walls 333 defining light ducts 332. The intermediate walls 333 are straight walls arranged at an angle δ with respect to a plane spanned by the lengthwise direction LD and the widthwise direction WD. The intermediate walls 333 have light absorbent surfaces 344 on both sides. The intermediate walls 333 are so long that no light ray running in the depthwise direction DD can pass through the light ducts 332. The main direction of light output from the illumination direction defining device 330, illustrated by light ray 56, forms the same angle δ with respect to a plane spanned by the lengthwise direction LD and the widthwise direction WD. When the illumination direction defining device 330 is mounted to light source 120 with LEDs 122 whose main direction of light emission is in the depthwise direction DD as illustrated by light ray 52, the illumination direction defining device 330 acts as an illumination direction changer. But since a major part of the light emitted from the LEDs 122 is absorbed by absorbent surfaces 344, the light intensity output from the illumination direction defining device 330 is rather low in this setup.

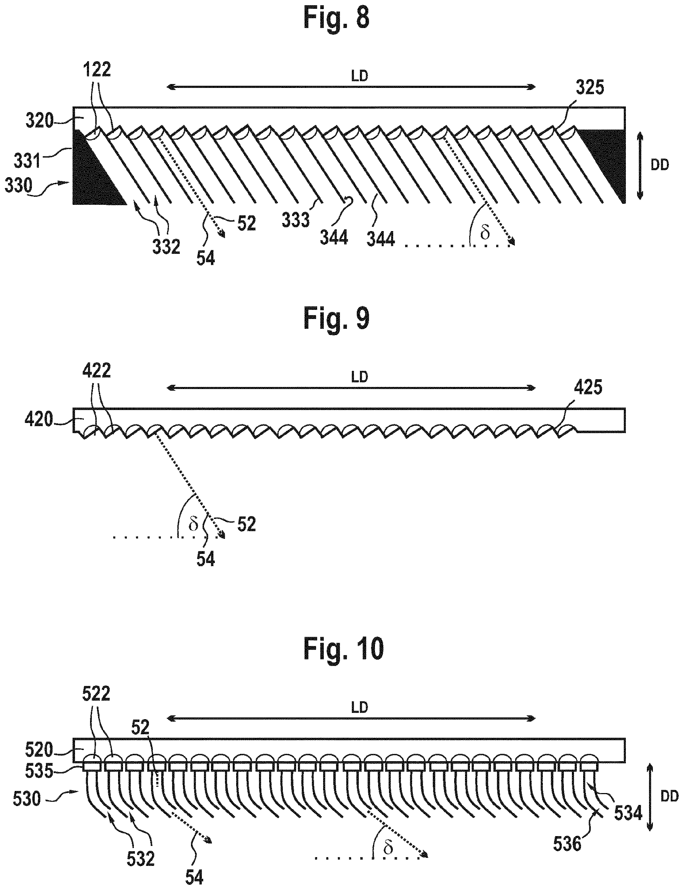

Fig. 8 schematically shows an embodiment where the illumination direction defining device 330 is used in combination with a different light source 320. The light source 320 has a body with a surface 325 having a zigzag appearance (or saw-toothed appearance) in the cross-sectional view of Fig. 8. The surface 325 is such that, when the LEDs 122 are mounted on or in the surface 325, the main direction of light emission of the LEDs 122, symbolized by the light ray 52, is parallel to the intermediate walls 333, i.e., the main direction of light emission of the LEDs is the same direction as the main direction of light output defined by the illumination direction defining device 330, symbolized by reference sign 54. In this embodiment, the light intensity is higher than in the embodiment of Fig. 7, and the illumination direction defining device 330 mainly serves to ensure the directionality of the illumination, and possibly to reduce the spread of the light of LEDs 122 by absorbing light rays impinging on the light absorbent surfaces 344.

Fig. 9 schematically shows an embodiment of a directional light source 420. The directional light source 420 includes light units 422 which have a low spread within the drawing plane, e.g., lower than or equal to 15°, 10° or even 5°, such as low spread LEDs or laser diodes. The light units 422 are arranged on or in a surface 425 similar to surface 325 of Fig. 8, such that the light units 422 emit light in the main direction 52, which is also the main direction of light output of an illumination system consisting of the directional light source 420, as indicated by reference sign 54. When such a directional light source is installed with its lengthwise direction aligned with the cross-machine direction, an illumination direction defining device may not be necessary to make topography defects in the machine direction visible.

Fig. 10 schematically illustrates an embodiment of an illumination system for a web imaging apparatus, where the light ducts are not hollow passages bounded by walls. Instead, the illumination direction defining device 530 includes light ducts in the form of fiber-optic light guides 532. The fiber-optic light guides 532 include an upper portion 534 extending in the depthwise direction DD and a lower portion 536. The fiber-optic light guides 532 are bent in between the upper portion 534 and the lower portion 536. Light emitted in the depthwise direction DD from light units 522 of a light source 520, e.g., laser light emitted from laser diodes (illustrated by light ray 52) is coupled into the fiber-optic light guides 532. The illumination direction defining device 530 may include one or more optical components 535 for coupling light from the light units 522 into the optic-fiber light guides 532. The main direction of light output of the illumination direction defining device 530 is illustrated by light ray 54, and forms an angle δ with respect to a plane spanned by the lengthwise direction LD and the widthwise direction WD. The angle δ may be, e.g., from 0.5° to 30° in the embodiments shown in Figs. 7-10. In the embodiment of Fig. 10, the illumination direction defining device 530 is an illumination direction changer. The optic-fiber light guides 532 may be flexible, allowing to easily adjust the angle δ.

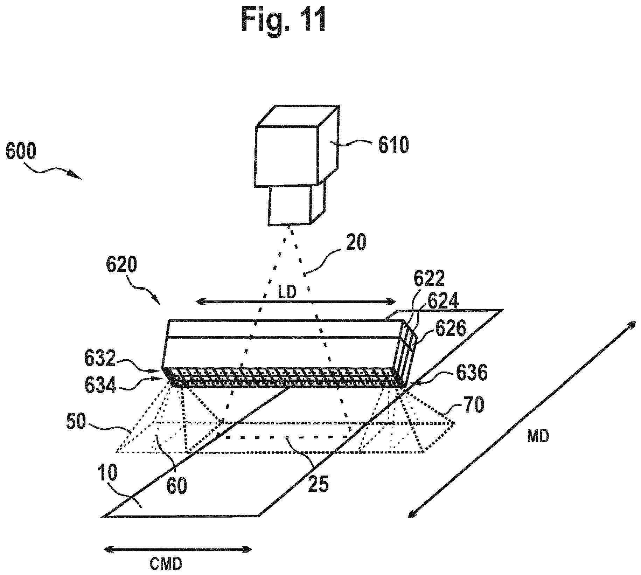

Fig. 11 shows a schematic illustration of a web imaging apparatus 600. Only the differences with respect to the web imaging apparatus 200 of Fig. 3 will be described. The web imaging apparatus 600 includes an illumination system 620. The illumination system includes a first light source 622 and a first illumination direction defining device 632, which together form a first sub-system of the illumination system 620. The illumination system includes a second light source 624 and a second illumination direction defining device 634, which together form a second sub-system of the illumination system 620. The illumination system includes a third light source 626 and a third illumination direction defining device 636, which together form a third sub-system of the illumination system 620. Light ducts, or at least lower portions thereof, of the first illumination direction defining device 632 may slant to the left in Fig. 11 (defining a first pre-defined principal direction). Light ducts of the second illumination direction defining device 634 may be straight (defining a second pre-defined principal direction). Light ducts, or at least lower portions thereof, of the third illumination direction defining device may slant to the right in Fig. 11 (defining a third pre-defined principal direction). The first sub-system illuminates the web 10 by first monochromatic light (e.g., red LED light) in the light cone 50, wherein the illumination direction of the first monochromatic light of light cone 50 has a component in the cross-machine direction CMD, shining in sideways to the left in Fig. 11. The second sub-system illuminates the web 10 by second monochromatic light (e.g., green LED light) in the light cone 60, wherein the illumination direction of the second monochromatic light of light cone 60 has no component in the cross-machine direction CMD, shining in straight in machine direction MD in Fig. 11. The third sub-system illuminates the web 10 by third monochromatic light (e.g., blue LED light) in the light cone 70, wherein the illumination direction of the third monochromatic light of light cone 70 has a component in the cross-machine direction CMD, shining in sideways to the right in Fig. 11. The illumination directions of all three sub-systems may have a large component in the machine direction MD, so the illuminations may be low angle illuminations in this respect. Light beams of the light cones 50, 60 and 70 illuminate line 25 on the web, but from different illumination directions with respect to the cross-machine direction CMD. The web imaging apparatus 600 includes a camera system 610, including three line scan cameras with field of view 20 for scanning line 25 of web 10 (or alternatively dual line scan cameras, multiple line scan cameras or matrix cameras one of the lines scanned by which is line 25 of web 10; for simplicity reference is made to three line scan cameras of the camera system 610 hereinafter). The first line scan camera cooperates with the first sub-system of the illumination system 620 and has a first filter for allowing the first monochromatic light to pass while filtering out the second and third monochromatic light. The second line scan camera cooperates with the second sub-system of the illumination system 620 and has a second filter for allowing the second monochromatic light to pass while filtering out the first and third monochromatic light. The third line scan camera cooperates with the third sub-system of the illumination system 620 and has a third filter for allowing the third monochromatic light to pass while filtering out the first and second monochromatic light. Thus, each line scan camera collects image data form the same area (line 25) of the web 10, but under different illumination directions. This additional information can be used to process the different sets of image data of the same area (line) jointly, e.g., for generating a surface topography of the web.

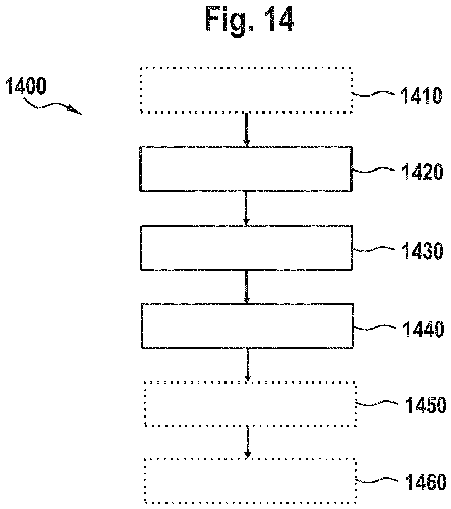

Fig. 14 shows a schematic flow diagram of a web imaging method 1400. The web extends in a machine direction and in a cross-machine direction. The method may include moving 1410 the web in the machine direction. The method includes illuminating 1420 the web with light beams having a common illumination direction that has a component in the cross-machine direction. The method includes line scanning 1430 the web, including collecting light scattered from a line on the web currently being in the field of view of the line scan. The method may include repeating line scanning, including collecting light scattered from the line on the web currently being in the field of view as the web moves underneath the scanned line. The method includes producing 1440 an image of the web from the collected light. The method may include detecting 1450 defects of the web in the image, and may include outputting 1460 an alert if a defect is detected.

According to embodiments, an illumination direction defining device is provided. The illumination direction defining device can be configured for an illumination system of a web imaging apparatus. The illumination direction defining device has a length, L_{IDDD}, in a lengthwise direction, a width, W_{IDDD}, in a widthwise direction, and a depth, D_{IDDD}, in a depthwise direction. The lengthwise direction, the widthwise direction, and the depthwise direction are mutually orthogonal to each other in the embodiment. The length L_{IDDD} may be larger than or equal to the width of the web. The length L_{IDDD} may be in the range from 1 cm to 15 m, such as from 50 cm to 12 m. The length L_{IDDD} is larger than the width W_{IDDD}. The width W_{IDDD} may be in the range from 1 cm to 50 cm, such as from 5 cm to 20 cm. The length L_{IDDD} may be larger than the depth D_{IDDD}. The depth D_{IDDD} may be in the range from 1 cm to 50 cm, such as from 3 cm to 30 cm.

The illumination direction defining device includes light ducts. The light ducts may be hollow passages bounded by walls (hollow light ducts). The walls, or at least portions thereof, may be planar. Alternatively, the light ducts may be made of material, such as glass fiber (material light ducts). The light ducts may be fiber-optic light guides. The density of the light ducts in the lengthwise direction may be ≥ 100 per meter, ≥ 333 per meter, or even ≥ 500 per meter, so the distance in the lengthwise direction between centers of the light ducts may be ≤ 10 mm, ≤ 3 mm or even ≤ 2 mm. The illumination direction defining device may include a number L_{LD} of light ducts. The number L_{LD} may be in the range from 2 to 7500. The number L_{LD} may be larger than, or equal to, 5, 10, 100, 1000 or 2000. For instance, with a web width and corresponding length L_{IDDD} of about 12 m, and a density of 333 per meter, the number of light ducts is about 4000. The light ducts are arranged adjacent to each other in the lengthwise direction.

The light ducts are configured to receive light from a light source of the illumination system, such as from light units of the light source emitting the light in the same principal emission direction. Each of the light ducts may include an input portion, wherein the input portion may include or be an opening for receiving the light, or may include a material surface such as the end of an optical glass fiber. The openings or the material surfaces may have a normal parallel to each other and aligned with the depthwise direction. The input portion may include at least one optical component, such as lenses, mirrors, apertures, plates, and the like, for guiding or coupling the light into the light ducts.

The light ducts are further configured to output light beams. The light beams output from the light ducts have the same pre-defined principal direction. Each of the light ducts may include an output portion, wherein the output portion may include at least one optical component, e.g., a direction turning film (DTF) defining the pre-defined principal direction. The light beams output from the light ducts may have a small spread in at least one direction. A small spread may be an emission of at least 90% of the light into an angle smaller than or equal to a 30°, 20° or even 10°. The number of light beams output from the light ducts may be equal to the number L_{LD} of light ducts. The pre-defined principal direction may be pre-defined by the geometry and/or optical properties of the light ducts. The pre-defined principal direction has a component in the lengthwise direction. The expression "component of a particular direction in some other direction" shall be understood to mean the length of the projection of a unit vector oriented in the particular direction onto the other direction. The component of the pre-defined principal direction in the lengthwise direction may be a major component, i.e., larger than the components of the principal direction in the depthwise direction and in the widthwise direction. The pre-defined principal direction has a component in the depthwise direction.

The light ducts may include an upper portion and a lower portion. The light ducts may be bent between the upper portion and the lower portion, or may be straight. The light ducts may exhibit a kink or turn between the upper portion and the lower portion. The light ducts may have a centerline that is bent, may have a kink, turn or may be straight. The centerline of a light duct is the line formed by the centers of gravity of all cross-sectional areas of the light duct in planes parallel to a plane spanned by the lengthwise direction and the widthwise direction. The expression "plane spanned by a first direction and a second direction" is to be understood as "plane spanned by a (unit) vector oriented in the first direction and by a (unit) vector oriented in the second direction". The cross-sectional areas may have an n-fold or continuous rotational symmetry and/or an n-fold or continuous mirror symmetry with respect to the centerline. The cross-sectional areas may be square, rectangular, circular or oval. The light ducts may then said to have an n-fold or continuous symmetry with the (bent) centerline as a line of symmetry. The size of the cross-sectional areas of a light duct may be in the range from 4 mm² to 40 cm². The size of the cross-sectional areas of a light duct may be constant. The light ducts may be bent and/or dimensioned in such a way that there is no direct line of sight in the depthwise direction. The light ducts may be bent and/or dimensioned in such a way that there is no direct line of sight through the light ducts.

In some embodiments, the light ducts can be hollow light ducts bounded by walls. The illumination direction defining device may include a housing. The housing can form at least front walls and back walls of the light ducts, i.e., walls extending in the lengthwise direction and in the depthwise direction. The housing may form a lateral wall of a first light duct and a lateral wall of a last light duct of the light ducts that are arranged adjacent in the lengthwise direction. The illumination direction defining device may include one or more intermediate walls. The intermediate walls separate the light ducts from each other and form lateral walls thereof. The intermediate walls may be rigidly connected to the housing, or be formed integrally with the housing. The intermediate walls and/or other lateral walls may have a thickness in the range from 0.1 mm to 10 mm, such as from 1 mm to 3 mm. The intermediate walls may have a distance from each other that is in the range from 2 mm to 5 cm. The intermediate walls and/or other lateral walls may be parallel to the centerlines of the light ducts.

In some embodiments, the intermediate walls and/or other lateral walls may have an upper wall portion and a lower wall portion. The length of the upper wall portion may be in the range from 1 mm to 300 mm, such as from 1 cm to 10 cm. The length of the lower wall portion may be in the range from 1 mm to 300 mm, such as from 1 cm to 10 cm. The intermediate walls and/or other lateral walls may be bent between the upper wall portion and the lower wall portion, and may particularly exhibit a kink or turn between the upper wall portion and the lower wall portion. The upper wall portion and the lower wall portion may define an interior angle φ larger than 135°, such as φ ≥ 136° or φ ≥137.5°, and smaller than 180°, such as φ ≤ 160° or φ ≤155°. An interior angle within the same ranges may exist between a tangent of the centerline at the input portion of a light duct and a tangent of the centerline at an output portion of the light duct. The distance between the intermediate walls, the interior angle φ, and the length of the lower wall portions may be such that there is no direct line of sight through the light ducts in the depthwise direction or no direct line of sight at all.

The illumination direction defining device may include reflective surfaces, e.g., plane mirrors. The reflective surfaces may be arranged to reflect light received from a light source such that the reflected light forms the light beams propagating in the pre-defined principal direction. The reflective surfaces (mirrors) may be matched to the color (frequency, wavelength) of the light received from the light source. The light ducts may include reflective surfaces, such as mirrors, in the lower portions of the light ducts. The reflective surfaces may be the interior surfaces of the lower wall portions of the intermediate walls, or part thereof. The interior surfaces are the surfaces adjacent to the interior angle. The reflective surfaces may be mirrors attached to the interior surfaces of the lower wall portions of the intermediate walls. The illumination direction defining device may include light absorbent surfaces. Some or all of the following surfaces, or at least parts thereof, may be light absorbent surfaces: the interior surfaces of the upper wall portions of the intermediate walls, the exterior surfaces of the upper wall portions of the intermediate walls, and the exterior surfaces of the lower wall portions of the intermediate walls. The light absorbent surfaces may be painted matte black.

In some embodiments, light ducts may run straight in the pre-defined principal direction. The intermediate walls may be straight. The intermediate walls may extend parallel to the pre-defined principal direction of the light beams output by the light ducts. Put differently, the pre-defined principal direction of the light beams is defined by the intermediate walls extending in that pre-defined principal direction. One or both sides of the intermediate walls, or at least parts thereof, may be light absorbent surfaces.

In some embodiments, the light ducts are material light ducts, e.g., fiber-optic light guides. The input portions of the illumination direction defining device may include fiber couplers for coupling light emitted by the light source into the fiber-optic light guides. The material light ducts may include an upper portion and a lower portion. The material light ducts may be bent between the upper portion and the lower portion. The bending angle φ_{b}, or interior angle between the upper portion and the lower portion, may be larger than 90°, such as φ_{b} ≥ 91° or φ_{b} ≥ 92.5°, and smaller than 180°, such as φ_{b} ≤ 135° or φ_{b} ≤ 110°. The material light ducts may be flexible, and the bending angle φ_{b} may be adjustable depending on how much the material light ducts are bent. The centerlines of the material light ducts may point in the pre-defined principal direction of the light beams at the output portions of the material light ducts. The material light ducts may have end surfaces at the output portions whose normal points in the pre-defined principal direction of the light beams.

According to further embodiments, an illumination system for a web imaging apparatus is provided. The illumination system includes a light source. The light source may be a directional light source. The light source has a length L_{LS} in a lengthwise direction, a width W_{LS} in a widthwise direction, and a depth D_{LS} in a depthwise direction. The length L_{LS} may be larger than the width W_{LS} and/or the depth D_{LS}. The light source includes light units, which may be directional light units. The light units may be or include, e.g., LEDs or laser diodes. The light units of a light source may be identical. The light sources of a light source may emit a pre-defined spectrum, e.g., a monochromatic spectrum. The light sources may, e.g., be red or green or blue LEDs (or laser diodes), or have other colors. The light units may be arranged in a one-dimensional array or line extending in the lengthwise direction. The light source may include a body extending in the lengthwise direction, the widthwise direction and the depthwise direction. The light units may be attached to or built into the body. The directional light source may be a line light source formed from the light units. The light units may be arranged and configured to emit light or light beams with a principal emission direction. The principal emission direction may have a component in the lengthwise direction. The component of the principal emission direction in the lengthwise direction may be the major component. The principal emission direction may have a component in the depthwise direction. The principal emission direction may form an angle δ with a plane spanned by the lengthwise direction and the widthwise direction. The angle δ may be in the range from 0.1° to 45°, from 0.5° to 40°, or from 1° to 30°. The angle d can be directional, meaning that the values in the given ranges can have positive or negative sign. The light units may have a spread of smaller than, or equal to, 30°, 15°, 10° or even 5°, in at least one direction perpendicular to the principal emission direction. The illumination system may consist of the directional light source that includes directional light units.

In some embodiments, the illumination system may include an illumination direction defining device as described herein. The illumination direction defining device may be mounted to the light source, such as to the body of the light source that supports the light units at the side of the light units. The illumination direction defining device may be mounted to the light source such that the lengths thereof are aligned along the lengthwise direction. The length L_{IDDD} of the illumination direction defining device may be the same or substantially the same as the length L_{LS} of the light source. The same may be true for the respective widths W_{IDDD} and W_{LS}. The principal emission direction of the light units may be in the depthwise direction, but may alternatively have a component in the lengthwise direction. The principal emission direction may be the same direction as the pre-defined principal direction of the light beams output from the light ducts of the illumination direction defining device. Alternatively, the principal emission direction may be different from the pre-defined principal direction of the light beams output from the light ducts of the illumination direction defining device. In this case, the illumination direction defining device is an illumination direction changer. For instance, reflective surfaces, such as plane mirrors, included in the light ducts may have a normal pointing in the direction of the bisecting line of the angle between the principal emission direction and the pre-defined principal direction of the light beams output from the light ducts.

The number N_{LD} of light ducts of the illumination direction defining device may be the same as the number N_{LU} of light units of the light source. Each light duct may receive light from only one light unit. Alternatively, one light unit may emit light into two or more light ducts, or into a light duct that is sub-partitioned by additional partitioning walls.

The illumination system may include more than one light source, wherein the light sources may have different emission characteristics, e.g., different emission spectra. Each of the light sources of the illumination system may have the properties described above, including a specific directionality, and the directionality may be different for different light sources. The illumination system may include a first light source and a second light source. The first light source may have a first emission spectrum, e.g., a first monochromatic emission spectrum, and the second light source may have second emission spectrum, e.g., a second monochromatic emission spectrum different from the first monochromatic emission spectrum. The first emission spectrum may be separable from the second emission spectrum, e.g., separable by frequency or by time. Frequency separation may be done by filtering, wherein a first filter would let essentially only the first emission spectrum pass and a second filter would let essentially only the second emission spectrum pass. Time separation may be done by synchronizing the different light sources to emit their respective light beams at different points in time ("flashing light" with coordinated frequency and phase of the on cycles and off cycles). The first light source and the second light source may be arranged to illuminate the same area, in particular the same line, on the web that is to be imaged, wherein imaging may be performed by one or more imaging devices as described herein. Alternatively, the first light source may be arranged to illuminate an area (line) on the web that is different from the area (line) on the web that the second light source is arranged to illuminate. The first light source may have a first principal emission direction forming an angle δ₁ with the plane spanned by the lengthwise direction and the widthwise direction. The second light source may have a second principal emission direction forming an angle δ₂ with the plane spanned by the lengthwise direction and the widthwise direction. The angle δ₁ may be different from the angle δ₂. The angle δ₁ may be have an opposite sign as compared to the angle δ₂. The angle δ₁ may be in the range from 0.1° to 45°, and the angle δ₁ may be in the range from -0.1° to - 45° or may be in the range from 75° to 90°. The illumination system may include a third light source. The third light source may have third emission spectrum, e.g., a third monochromatic emission spectrum different from the first monochromatic emission spectrum and from the second monochromatic emission spectrum. The third emission spectrum may be separable from the first emission spectrum and from the second emission spectrum. The third light source may be arranged to illuminate the same area, in particular the same line, on the web that is to be imaged as the first light source and the second light source. Alternatively, the third light source may be arranged to illuminate an area (line) on the web different from the areas (lines) illuminated by the first and second light sources. The third light source may have a third principal emission direction forming an angle δ₃ with the plane spanned by the lengthwise direction and the widthwise direction. The angle δ₃ may be different from the angle δ₁ and from the angle δ₂. The angle δ₃ may be in the range from 75° to 90° while the angle δ₁ may be in the range from 0.1° to 45° and the angle δ₂ may be in the range from -0.1° to -45°. The illumination system may include several groups of light sources, wherein the light sources of each group are arranged to illuminate the same area, in particular the same line, on the web that is to be imaged, whereas light sources of different groups are arranged to illuminate different areas, in particular lines, on the web to be imaged. For instance, the first, second, and, if present, the third light sources may be members of a first group of light sources, and the illumination system may include a second group of light sources also including first, second and possibly third light sources with the properties set forth herein, wherein the first, second and possibly third light sources of the first group are arranged to illuminate a first area (line) of the web and the first, second and possibly third light sources of the second group are arranged to illuminate a second area (line) of the web different from the first area (line). The illumination system may consist of directional light sources that include directional light units. Alternatively, one or more of the light sources may be coupled/mounted to an illumination direction defining device (or illumination direction changing device) as described herein.

The illumination system may include more than one illumination direction defining device as described herein. The illumination system may include a first illumination direction defining device and a second illumination direction defining device. The first illumination direction defining device may be mounted to the first light source. The first illumination direction defining device may include reflective surfaces (mirrors) matched to the first emission spectrum of the first light source. The second illumination direction defining device may be mounted to the second light source. The second illumination direction defining device may include reflective surfaces (mirrors) matched to the second emission spectrum of the second light source. The first illumination direction defining device may have a first pre-defined principal direction of the light beams output from the light ducts of the first illumination direction defining device. The second illumination direction defining device may have a second pre-defined principal direction of the light beams output from the light ducts of the second illumination direction defining device. The illumination system may include a third illumination direction defining device. The third illumination direction defining device may be mounted to the third light source. The third illumination direction defining device may include reflective surfaces (mirrors) matched to the third emission spectrum of the third light source. The third illumination direction defining device may have a third pre-defined principal direction of the light beams output from the light ducts of the third illumination direction defining device. The first principal emission direction of the first light source (of the light units of the first light source) may be the same as the first pre-defined principal direction or may be different, as generally explained above, and the same holds for second (third) principal emission direction in relation to the second (third) pre-defined principal direction. The first light source with mounted first illumination direction defining device, the second light source with mounted second illumination direction defining device, and, where present, the third light source with mounted third illumination direction defining device may be arranged to illuminate the same area, in particular the same line, on the web that is to be imaged, or may alternatively be arranged to illuminate different areas (lines) on the web. The first, second and third pre-defined principal directions may form angles δ₁□□δ₂, and δ₃ with the plane spanned by the lengthwise direction and the widthwise direction, respectively, wherein these angles may be in the ranges described above for the case of different principal emission directions of the light sources. The illumination system may include several groups of illumination direction defining devices, each group being associated with a corresponding group of light sources described herein. An illumination direction defining device may include a quick-mounting mechanism for mounting it to a respective light source. The pre-defined principal direction can thereby be changed quickly, for instance for illuminating and imaging different webs.

According to further embodiments, a web imaging system is provided. The web imaging system is configured to image a web that extends in machine direction and in a cross-machine direction perpendicular to the machine direction, and that moves in the machine direction. The web may have a width W_{W} from 1 cm to 15 m in the cross-machine direction. The web imaging system includes an illumination system as described herein. The illumination system is arranged for illuminating the web with the light beams of the one or more light sources. The illuminating system may be arranged to illuminate one area (line) of the web, or different areas (lines) of the web. In the case of one light source, the light beams may be output by the illumination direction defining device or by the directional light source as described herein. In the case of more than one light source, the light beams may be output by the illumination direction defining devices or by the directional light sources. In the following, features for the case of one light source are described. The same features can be present for at least one of the light sources (possibly with mounted illumination direction defining device) of an illumination system having more than one light source. The light beams have a component in the lengthwise direction of the illumination system, of the illumination direction defining device or of the directional light source. The illumination system is positioned and oriented such that the light beams have a component in the cross-machine direction. The illumination system may be positioned and oriented such that the lengthwise direction of the illumination system is aligned with the cross-machine direction. The illumination system may be positioned and oriented such that the illumination direction has a large component in the cross-machine direction, where the large component in the cross-machine direction is larger than a component of the illumination direction in the direction perpendicular to both the machine direction and the cross-machine direction (low angle illumination in the cross-machine direction, corresponding to the angle γ in Fig. 5 being large). The illumination system may be positioned and oriented such that the illumination direction has a large component in the machine direction, where the large component in the machine direction is larger than the component of the illumination direction in the direction perpendicular to both the machine direction and the cross-machine direction (low angle illumination in the machine direction, corresponding to the angle β in Fig. 4 being small). The illumination direction depends on the pre-defined principal direction of the light beams output from the illumination system (from the illumination direction defining device or from the directional light source), and from the position and orientation of the illumination system (of the illumination direction defining device or of the directional light source).

The web imaging system may include an illumination system with more than one light source as described herein. For instance, the web imaging system may include an illumination system that includes the first, second and third light sources on which corresponding first, second and third illumination direction defining devices are mounted as described herein. The illumination system may be positioned and oriented such that the illumination directions of all three illumination sub-systems (light sources with mounted illumination direction defining devices) have a large component in the machine direction, where the large component in the machine direction is larger than the component of the illumination directions in the direction perpendicular to both the machine direction and the cross-machine direction (low angle illumination in the machine direction for all three illumination sub-systems, corresponding to a low angle β in Fig. 4). The illumination system may be positioned and oriented such that the illumination direction of the first light source with mounted first illumination direction defining device (i.e., the first pre-defined principal direction) has a large positive component in the cross-machine direction, where the large positive component in the cross-machine direction is larger than a component of the illumination direction in the direction perpendicular to both the machine direction and the cross-machine direction (low angle illumination in the cross-machine direction, corresponding to a large positive angle γ in Fig. 5). The illumination system may be positioned and oriented such that the illumination direction of the second light source with mounted second illumination direction defining device (i.e., the second pre-defined principal direction) has a large negative component in the cross-machine direction, where the large negative component in the cross-machine direction is larger than a component of the illumination direction in the direction perpendicular to both the machine direction and the cross-machine direction (opposite, low angle illumination in the cross-machine direction, corresponding to a large negative angle γ in Fig. 5). The illumination system may be positioned and oriented such that the illumination direction of the third light source with mounted third illumination direction defining device (i.e., the third pre-defined principal direction) has a vanishing component in the cross-machine direction (corresponding to an angle γ of about 0° in Fig. 5). As before, the illumination directions depend on the pre-defined principal directions of the light beams output from the different sub-systems of the illumination system (from the illumination direction defining devices or from the directional light sources), and from the position and orientation of the illumination system or of sub-systems thereof (of the illumination direction defining devices and/or of the directional light sources).

The web imaging system includes an imaging device. The imaging device is configured to collect scattered light scattered/reflected from the web. The imaging device is configured to provide an image of the collected light. The image of the collected light may show the surface structure of the web. The image may show defects of the web. The imaging device may include a camera. The imaging device may include a line scan camera. The line scan camera may be arranged to scan a line on the web. The line scan camera may be arranged to scan a line extending in the cross-machine direction. The line scan camera may be configured to scan the entire width of the web in the cross-machine direction. The illumination system may be arranged (positioned and oriented) to illuminate the line scanned by the line scan camera. The illumination system may be arranged such that the illumination direction, in which the light intensity is the largest, points to the line scanned by the line scan camera.

The web imaging device may include from 1 to 100 line scan cameras. The web imaging device may include a dual line scan camera or several dual line scan cameras. The web imaging device may include a multiple line scan camera or several multiple line scan cameras, such as from 1 to 50 dual line scan cameras. Dual line scan cameras scan 2 lines of pixels, and multiple line scan cameras may scan 3 or more, such as from 3 to 100, lines of pixels, the lines being counted in the machine direction. A line scan camera, a dual line scan camera or a multiple line scan camera may have a resolution of larger than 1000 pixels per line, such as 2048, 4096 or 8192 pixels per line. They may have a scan rate of several thousand lines per second, e.g., 80 kLines/s.

Each camera of the web imaging device may be configured to cooperate with a particular light source or sub-system of the illumination system (including light source and mounted illumination direction defining device), and to collect light emitted from that particular light source/sub-system under a particular illumination angle and scattered/reflected from the web. Each camera of the web imaging device may be configured to separate this light from other light emitted from different light sources/sub-systems of the illumination system under different illumination angles. Cameras of the web imaging device may separate one emission spectrum from the other either by time separation (in coordination with flashing illuminations), by spatial separation (i.e., by viewing different areas (lines) on the web) and/or by frequency separation (using filters and/or color lenses to suppress other emission spectra than the desired one with which cooperation is in progress). In this way, more information about the surface structure and about potential defects of web can be gathered, namely several sets of image data of the same area (line) of the web with illuminations under different angles and/or with different forms of light (e.g., red, blue, and green light). This allows comparison of such sets of image data, enabling further possibilities of image (post) processing, in particular determination of surface topography, using techniques such as "shape from shading" or photometry, including photometric stereo techniques, and the like.

For instance, the web imaging system may include a first line scan camera, a second line scan camera, and a third line scan camera, all arranged for scanning the same line on the web. The first line scan camera may include a first filter for letting the first emission spectrum of the first light source pass and for filtering out the second and third emission spectra of the second and third light sources described herein. Similarly, the second (third) line scan camera may include a second (third) filter for letting the second (third) emission spectrum pass and for filtering out the first and third (second) emission spectrum of the first and third (second) light sources. The first, second and third line scan cameras can be arranged to collect light from the first, second, and third light sources respectively. Therein the light from the first, second and third light sources arrives at the web under different first, second and third illumination directions. The first, second and third illumination directions can be defined by the positions/orientations of the first, second and third light sources and by the first, second and third principal emission directions of the first, second and third light sources. The illumination system may include first, second and third sub-systems of the illumination system. The first, second and third sub-systems may include, besides the first, second and third light sources, first, second and third illumination direction defining devices mounted to the first, second and third light sources, respectively. The first, second and third illumination directions can then be defined by the positions/orientations of the first, second and third sub-systems of the illumination system and by the first, second and third pre-defined principal directions of the light ducts of the respective first, second and third illumination direction defining devices. The light from the first, second and third light sources may, for instance, be red, green and blue LED light arriving at the web under the different illumination directions, and so the first, second and third line scan camera collect scattered/reflected red, green and blue light, respectively. Thus, information about the surface structure and defects of the web is collected with differently colored, monochromatic light under different illumination directions. The camera may be a color camera, e.g. a multiple line scan color camera, which may operate at 40 kHz or higher, e.g., at 70 kHz, and which may use CMOS line scan with 2k to 8k pixels and bilinear, trilinear or quadrilinear color architecture.

The web imaging system may include a display for displaying the image(s) of the web (or of a part thereof) produced by the web imaging system. The web imaging system may include an evaluation system for automatic detection of the quality of the surface of the web and/or for automatic detection of defects of the web from the image(s) produced by the imaging device. The evaluation system may be implemented in hardware and/or software. The web imaging system may include alert devices, such as visible alerts on the display or audible alerts, to alert operators of defects on the web.

According to further embodiments, a web production facility is provided, such as a paper production facility. The web production facility includes a web imaging system as described herein. The web production facility may include a support system for supporting the web. The support system may include guide roller(s) and/or transport roller(s) for moving the web in the machine direction. The web production facility may include a winding roller, e.g., a winding roller for winding up the web. The guide roller(s), transport roller(s) and/or winding roller(s) can define the cross-machine direction and the machine direction, inter alia by the rotation axis/by the rotation axes, wherein the direction of a rotation axis can define/be aligned with the cross-machine direction.

According to further embodiments, a web imaging method is provided. The web imaging method includes moving a web in a machine direction. The web extends in the machine direction and in a cross-machine direction perpendicular to the machine direction. The web has width W_{W} in the cross-machine direction. The web may be a paper web or a paper board web. The web may be a pulp web. The web may include, or be formed of, other materials, such as metals, glass fibers or plastics. The web may exhibit defects, such as color defects or topographical defects. Some topographical defects may extend in the machine direction, e.g., blade streaks. The method includes illuminating the web with light beams. The light beams may be parallel, i.e., the principal direction of light propagation of the light beams is the same. The principal direction of the light beams defines the illumination direction. The illumination direction of the light beams has a component in the cross-machine direction. The illumination direction may be defined by an illumination system as described herein, in particular by a pre-defined principal direction of the light beams as output from the illumination system, and by the position and orientation of the illumination system which may shift and rotate the light beams with respect to the web. The spread of the light beams may be less than 30°, less than 15°, less than 10° or even less than 5°, at least in the machine direction.

The method further includes collecting scattered light that is scattered from the web and providing an image of the collected scattered light. The scattered light may be collected from a line on the web, particularly from a line extending in the cross-machine direction. Accordingly, collecting may be line scanning of the web. Line scanning may be repeated with high frequency. The image that is provided may be produced from repeated line scanning. The image may show the defects of the web, in particular defects extending in the machine direction. Collecting the scattered light may be done by an imaging device as described herein. The method may further include at least one of: displaying the image of the web, manually or automatically evaluating the image to detect defects, and outputting an alert if defects are detected. Further, if an illumination direction defining device, a directional light source, an illumination system, an imaging device, a display and/or an alert system are used in the method, the functions exercised by their components give rise to additional method steps that the method may include.

According to further embodiments, an illumination direction defining device according to embodiments described herein is used for illuminating a web, such as a paper web or paper board web or pulp web. Embodiments thus relate to the use of an illumination direction defining device as described herein to illuminate the web with an illumination direction having a component in the cross-machine direction. Further embodiments relate to the use of a directional light source as described herein to illuminate the web with an illumination direction having a component in the cross-machine direction. Embodiments also relate to the use of an illumination system as described herein to illuminate the web with an illumination direction having a component in the cross-machine direction. Embodiments relate to the use of a web imaging system as described herein to image and/or monitor the web while illuminating the web with an illumination direction having a component in the cross-machine direction. Further, if an illumination direction defining device, a directional light source, an illumination system, an imaging device, a display and/or an alert system are used, the functions exercised by their components give rise to additional features that their use may include.

## Claims

1. An illumination direction defining device (230, 330, 530) for an illumination system (220) of a web imaging apparatus (200), the illumination direction defining device comprising:
a length (L_{IDDD}) in a lengthwise direction (LD);
a width (W_{IDDD}) in a widthwise direction (WD), the length being larger than the width;
a depth (D_{IDDD}) in a depthwise direction (DD);
light ducts (232, 332, 532) arranged adjacent to each other in the lengthwise direction and configured to receive light from a light source (120, 320, 520) of the illumination system and to output light beams (40) having a pre-defined principal direction (54, 56) that has a component in the lengthwise direction and a component in the depthwise direction.

2. The illumination direction defining device according to claim 1, wherein the light ducts include an upper portion (234, 534) and a lower portion (236, 536), wherein the light ducts are bent between the upper portion and the lower portion, and preferably exhibit a kink or a turn between the upper portion and the lower portion.

3. The illumination direction defining device according to claim 2, wherein the light ducts include a mirror (242) in the lower portion.

4. The illumination direction defining device according to claim 1, wherein the light ducts are straight, and wherein the light ducts run in the pre-defined principal direction or include, in respective output portions, direction turning films that define the pre-defined principal direction.

5. The illumination direction defining device according to any one of the preceding claims, wherein the light ducts include a light absorbing surface (244, 344), in particular a matte black surface.

6. An illumination system (220) for a web imaging apparatus, comprising:
a light source (120, 420, 520), the light source having a length (L_{LS}) in a lengthwise direction (LD) and width (W_{LS}) in the widthwise direction (WD),
wherein the illumination system is configured to output light beams (40, 50, 70) having a pre-defined principal direction (54, 56) that has a component in the lengthwise direction and a component in a depthwise direction, the depthwise direction being perpendicular to the lengthwise direction and to the widthwise direction.

7. The illumination system according to claim 6, wherein the light source includes a one-dimensional array of light units (122, 422, 522) arranged adjacent to each other in the lengthwise direction, wherein the light source is optionally a directional light source and the light units emit light in the pre-defined principal direction.

8. The illumination system according to any one of claims 6-7, comprising a first illumination direction defining device being an illumination direction defining device according to any one of claims 1-5, wherein the first illumination direction defining device is optionally mounted to the light source.

9. The illumination system according to claim 8, wherein the light ducts of the first illumination direction defining device each receive light from one light unit (122, 422, 522) of the light source.

10. The illumination system according to any one of claims 6 to 9, wherein a first sub-system of the illumination system includes the light source and is configured to output the light beams (50) having the pre-defined principal direction that has a component in the lengthwise direction and a component in the depthwise direction, and wherein the illumination system comprises a second sub-system that includes a second light source and that is configured to output light beams (70) having a second pre-defined principal direction, wherein the second pre-defined principal direction is different from the pre-defined principal direction, wherein the second pre-defined principal direction can optionally have a component in the lengthwise direction and a component in the depthwise direction.

11. The illumination system according to claim 10, wherein the second sub-system includes a second illumination direction defining device, the second illumination direction defining device optionally being an illumination direction defining device according to any one of claims 1-5, the second illumination direction device optionally being mounted to the second light source, wherein the second illumination direction defining device defines the second pre-defined principal direction.

12. A web imaging system (200), comprising:
an illumination system according to any one of claims 7-11, the illumination system being arranged for illuminating a web (10), and
an imaging device (110) configured to collect light scattered or reflected from the web and to provide an image of the web generated from the collected light.

13. The web imaging system according to claim 12, wherein the web extends in a machine direction (MD) and in a cross-machine direction (CMD) perpendicular to the machine direction and moves in the machine direction when the web is imaged by the web imaging apparatus, wherein the illumination system is arranged such that the lengthwise direction and the cross-machine direction are aligned.

14. A web imaging method, comprising:
moving a web (10) in a machine direction (MD), the web extending in the machine direction and in a cross-machine direction (CMD) perpendicular to the machine direction;
illuminating the web with light beams (40),
collecting scattered light scattered from the web, and
providing an image of the collected scattered light,
wherein an illumination direction (42) of the light beams has a component in the cross-machine direction.

15. Use of an illumination direction defining device according to any one of claims 1-5 or of an illumination system according to any one of claims 7-11 for illumination of a web (10) that extends in a machine direction (MD) and in a cross-machine direction (CMD) perpendicular to the machine direction, wherein the illumination has an illumination direction (42) that has a component in the cross-machine direction.
